# EUROPEAN PATENT APPLICATION

(11) **EP 4 080 649 A1**
(43) Date of publication of application: **26.10.2022**
(21) Application number: 20901473.7
(22) Date of filing: 07.12.2020
(51) Int. Cl.: H01M 50/10, H01M 50/183, H01M 50/60, H01M 10/04

(54) **CYLINDRICAL SECONDARY BATTERY HAVING FLEXIBLE INPUT PART**

(30) Priority: 18.12.2019 KR 20190169530
(71) Applicant: LG ENERGY SOLUTION, LTD., Seoul 07335 (KR)
(72) Inventor: LEE, Hyeon Haeng, Daejeon 34122 (KR)
(74) Representative: Goddar, Heinz J.
(86) International application number: PCT/KR2020/017773
(87) International publication number: WO 2021/125654

(57) **Abstract**

The present invention relates to a cylindrical secondary battery configured such that a hole is provided in a bottom portion of the cylindrical secondary battery manufactured using a metal can and the hole is hermetically sealed using a flexible material, such as rubber.

## Description

### [Technical Field]

This application claims the benefit of priority to Korean Patent Application No. 2019-0169530 filed on December 18, 2019, the disclosure of which is incorporated herein by reference in its entirety.

The present invention relates to a cylindrical secondary battery provided with a flexible input portion. More particularly, the present invention relates to a cylindrical secondary battery configured such that a hole is provided in a bottom portion of the cylindrical secondary battery manufactured using a metal can and the hole is hermetically sealed using a flexible material, such as a thermoplastic polymer resin or rubber.

### [Background Art]

Secondary batteries are classified based on the shape of a battery case. Secondary batteries may be mainly classified into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

An electrode assembly mounted in a battery case is a power-generating element that is configured to have a structure including a positive electrode, a negative electrode, and a separator interposed between the positive electrode and the negative electrode and that can be charged and discharged. The electrode assembly is classified as a jelly-roll type electrode assembly, which is configured to have a structure in which a long sheet type positive electrode having an active material applied thereto and a long sheet type negative electrode having an active material applied thereto are wound in the state in which a separator is interposed between the positive electrode and the negative electrode, or a stacked type electrode assembly, which is configured to have a structure in which a plurality of positive electrodes having a predetermined size and a plurality of negative electrodes having a predetermined size are sequentially stacked in the state in which separators are interposed respectively between the positive electrodes and the negative electrodes. Thereamong, the jelly-roll type electrode assembly has advantages in that the jelly-roll type electrode assembly is easy to manufacture and has high energy density per unit weight.

The jelly-roll type electrode assembly may be mounted in a cylindrical metal can in order to constitute a cylindrical secondary battery. The cylindrical secondary battery is widely used in fields in which a high-capacity secondary battery is necessary, such as electric vehicles.

Unlike the pouch-shaped battery, the cylindrical secondary battery is activated after assembly thereof. When the cylindrical secondary battery is assembled, the can, which constitutes an outer case, is hermetically sealed. In a process of activating the battery, gas is inevitably generated. The pouch-shaped battery is finally hermetically sealed after gas generated in the battery is discharged to the outside. The secondary battery is not provided with a separate discharge port, through which the gas generated in the battery can be smoothly discharged.

The cylindrical secondary battery starts to be used in the state in which pressure in the battery already increases. The extent to which an electrolytic solution in the battery is volatilized to the outside due to an increase in pressure in the battery as the result of continuous use thereof is higher than in other kinds of batteries, which leads to reduction in lifespan and deterioration in performance of the battery.

Patent Document 1 relates to a cylindrical battery including an electrolytic solution injection port, the cylindrical battery being a secondary battery having a structure in which an electrode assembly having a positive electrode/separator/negative electrode structure is mounted in a cylindrical can, wherein a cap assembly is mounted at an upper end portion, which is open, of the can, at least one opening configured to allow a user to inject an electrolytic solution therethrough is formed in the outer surface of the can by perforation, and a sealing member, through which an electrolytic solution injection pin is capable of extending, is forcibly inserted into the opening in order to hermetically seal the opening from the outside.

In Patent Document 1, 1) it is not easy to perforate the side surface of the cylinder at a uniform position thereof, since the side surface of the cylinder is perforated, 2) technical attention is required to perforate the side surface of the cylinder, and 3) it is necessary to manufacture a separate support portion having a corresponding shape in order to seal a hole provided in the side surface of the cylinder. In the case in which an iron sheet is stretched to manufacture a can in the state in which the iron sheet is perforated in advance, the iron sheet is not uniformly stretched due to the perforated region of the iron sheet. For this reason, the can must be perforated after the can is manufactured. Also, 4) in the case in which several can type secondary batteries are combined to manufacture a battery module, each secondary battery may be caught by a projection of the support portion or it is difficult to pack the secondary batteries in the same shape due to the support portion provided at the side surface of the cylinder. 5) Despite being supported by the separate support portion, load applied to the sealing member may not be uniform or symmetrical, since the sealing member is coupled to the side surface of the cylinder. Furthermore, 6) Patent Document 1 does not concretely disclose a sealing material.

Patent Document 2 relates to a secondary battery including an electrode unit having a positive electrode and a negative electrode installed in the state in which an insulation plate is interposed therebetween, a cap assembly connected to the positive electrode of the electrode unit, a can connected to the negative electrode of the electrode unit, the electrode unit being inserted into the can, and an electrolytic solution injection device installed at the can.

The electrolytic solution injection device of Patent Document 2 includes an injection hole formed in the can, a body installed at the can, the body having a plurality of supply holes connected to the interior of the battery, a valve member inserted into the body so as to connect the injection hole and the supply holes to each other or to disconnect the injection hole and the supply holes from each other, and a pressurization member configured to apply uniform force to the valve member. A spring is used as the pressurization member.

In Patent Document 2, an opening and closing device using elasticity of the spring is added to a bottom portion of the can. However, there are shortcomings in that 1) the volume necessary in order to provide a physical elastic portion, i.e. the spring, is large, 2) an intrinsic problem in which an electrolytic solution permeates due to a physically moving construction may occur, and 3) installation is complicated.

In the situation in which technology for maximally increasing the capacity of the battery is seriously required, the actually usable volume of the secondary battery is reduced due to the opening and closing device. Consequently, it can be easily recognized that Patent Document 2 is technology that is very restrictively used or has many disadvantages.

Therefore, it is necessary to develop technology capable of effectively and economically solving problems with the cylindrical secondary battery, such as rapid evaporation of an original electrolytic solution due to initial sealing and activation of the battery, a decrease in lifespan of the battery, and deterioration in performance of the battery. In addition, minimum deformation of a battery module or a battery pack, for which utilization of the secondary battery gradually increases, is a condition necessary to replace a conventional can type battery.

### (Prior Art Documents)

(Patent Document 1) Korean Patent Application Publication No. 2018-0010389 (2018.01.31)
(Patent Document 2) Korean Utility Model Application Publication No. 1998-021641 (1998.07.15)

### [Disclosure]

### [Technical Problem]

The present invention has been made in view of the above problems, and it is an object of the present invention to provide technology capable of effectively and economically solving problems with a cylindrical secondary battery, such as rapid evaporation of an original electrolytic solution due to initial sealing and activation of the battery, a decrease in lifespan of the battery, and deterioration in performance of the battery.

To this end, the present invention provides a cylindrical secondary battery that is capable of being hermetically sealed after activation of the cylindrical secondary battery. Specifically, it is an object of the present invention to provide a cylindrical secondary battery provided with a new and flexible input portion configured such that 1) it is possible to supply an additional electrolytic solution even after hermetic sealing, 2) performance of hermetic sealing is excellent, 3) there is little compatibility problem due to deformation of a case even in the case in which the cylindrical secondary battery is used in a conventional battery module or a conventional battery pack, 4) it is possible to easily and economically manufacture the cylindrical secondary battery, and 5) it is possible to prevent a decrease in capacity of a conventional secondary battery due to introduction of technology.

### [Technical Solution]

In order to accomplish the above object, a cylindrical secondary battery according to the present invention includes a cylindrical can -having a circular bottom portion and a cylinder-shaped outer wall connected to an outer circumference of the bottom portion, a jelly-roll type electrode assembly received in the cylindrical can, the jelly-roll type electrode assembly having a structure in which a positive electrode and a negative electrode are wound in the state in which a separator is interposed between the positive electrode and the negative electrode, and a cap assembly configured to hermetically seal the cylindrical can, wherein a through-hole is formed in a portion of the bottom portion of the cylindrical can, the through-hole being hermetically sealed by a sealing portion.

The bottom portion may be formed so as to have a curved surface that is concave inwardly of the cylindrical battery, and the center of the bottom portion may include a flat portion.

The bottom portion may be configured such that the radius of curvature of the concavely curved surface is increased from the outer periphery to the center of the bottom portion.

The through-hole may be disposed at the center of the bottom portion of the cylindrical can. Specifically, the through-hole may be disposed at a central portion of the bottom portion of the cylindrical can excluding a region of the bottom portion to which a negative electrode tab is welded.

The detailed shape of the through-hole is not restricted. For example, the shape of through-hole may be a restoratively circular shape, and may be variously changed as needed.

The sealing portion may be made of a polymer resin. The polymer resin of the cylindrical secondary battery may be a thermoplastic polymer resin or a thermosetting polymer resin, specifically a thermoplastic polymer resin. Concretely, the polymer resin may be an elastomer.

As a nonrestrictive example of the sealing portion, the sealing portion may be configured as a plug, the radius of a central portion of which is less than the radius of the outer periphery thereof.

The plug may be configured such that a projection, the radius of which is gradually increased and is then abruptly decreased, is formed at a portion of the plug configured to be inserted into the cylindrical secondary battery.

In another aspect, the present invention provides a method of manufacturing a cylindrical secondary battery. The method of manufacturing the cylindrical secondary battery includes:
1) forming a through-hole in a bottom portion of a cylindrical secondary battery;
2) receiving an electrode assembly and assembling a cap assembly;
3) disposing the cylindrical battery assembled in step 2) such that the bottom portion faces upwards;
4) injecting an electrolytic solution through the through-hole and activating the cylindrical battery or initially charging and discharging the cylindrical battery; and
5) hermetically sealing the through-hole using a sealing portion.

The method may further include injecting an additional electrolytic solution between step 4) and step 5), and the hermetically sealing step of step 5) may include hermetically sealing the through-hole using a plug, the radius of a central portion of which is less than the radius of the outer periphery thereof.

The hermetically sealing step of step 5) may include injecting a thermoplastic polymer resin into the through-hole so as to cover a negative electrode tab region welded to the cylindrical can in order to hermetically seal the through-hole.

The present invention may be provided through various combinations of the technical solutions.

### [Description of Drawings]

FIG. 1 is a vertical sectional view of a conventional general cylindrical secondary battery.
FIG. 2 is a sectional view of a cylindrical secondary battery provided with a through-hole according to an embodiment of the present invention and the cylindrical secondary battery in the state in which the through-hole is hermetically sealed.
FIG. 3 is a sectional view showing the lower parts of three kinds of cylindrical secondary batteries according to the present invention, each of which is provided with a through-hole.
FIG. 4 is a perspective view of sealing portions according to the present invention.
FIG. 5 is a view showing an example in which the through-hole according to the present invention is hermetically sealed using a sealing portion.
FIG. 6 is a schematic view showing a process of assembling a cylindrical secondary battery according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, embodiments of the present invention will be described in detail with reference to the accompanying drawings.

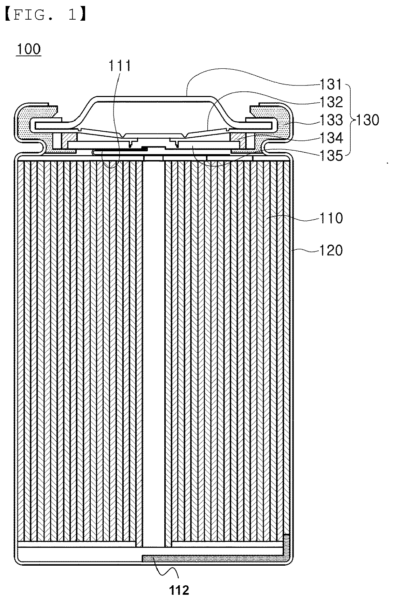

FIG. 1 is a vertical sectional view showing a conventional general cylindrical secondary battery. Referring to FIG. 1, the cylindrical secondary battery 100 is configured such that an electrode assembly 110 is received in a cylindrical can 120, a cap assembly 130 is located at the upper part of the cylindrical can, and the cylindrical secondary battery 100 is hermetically sealed by a crimping gasket 133.

The cap assembly 130 includes a venting member 132 located at the lower part of a top cap 131 while wrapping the outer circumference of the top cap and a current interrupt member 135 located at the lower part of the venting member 123 while contacting a central portion of the venting member 132. A lower gasket 134 configured to prevent the venting member 132 and the current interrupt member 135 from contacting each other at the portion of the venting member 132 other than the central portion thereof is located at the outer periphery of the current interrupt member 135.

A positive electrode tab 111 of the electrode assembly 110 is attached to the lower surface of the current interrupt member 135 such that the cap assembly 130 serves as a positive electrode terminal, and a negative electrode tab 112 is coupled to the bottom portion of the cylindrical can 120 by welding.

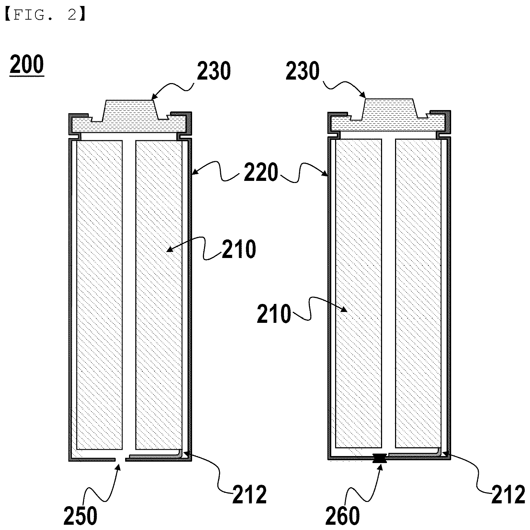

FIG. 2 is a sectional view of a cylindrical secondary battery 200 provided with a through-hole according to an embodiment of the present invention and the cylindrical secondary battery 200 in the state in which the through-hole is hermetically sealed.

Referring to FIG. 2, the cylindrical secondary battery 200 according to the present invention is a cylindrical secondary battery 200 including a cylindrical can 220 constituted by a circular bottom portion and a cylinder-shaped outer wall connected to the outer circumference of the bottom portion, a jelly-roll type electrode assembly 210 received in the cylindrical can 220, the jelly-roll type electrode assembly having a structure in which a positive electrode, a negative electrode, and a separator interposed between the positive electrode and the negative electrode are wound, and a cap assembly 230 configured to hermetically seal the cylindrical can 220. A through-hole 250 is formed in a portion of the bottom portion of the cylindrical can 200, and the through-hole 250 is hermetically sealed by a sealing portion 260.

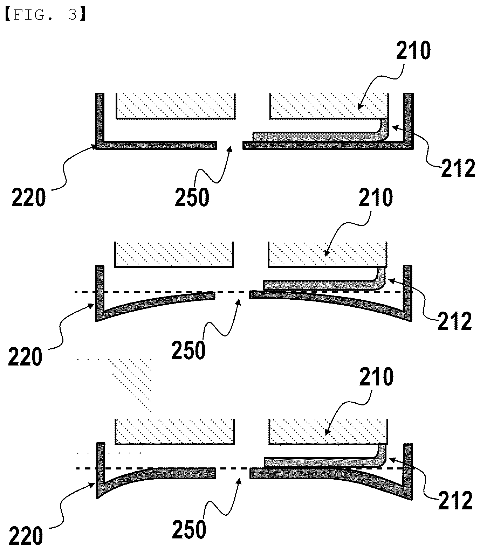

FIG. 3 is a sectional view showing the lower parts of three kinds of cylindrical secondary batteries according to the present invention, each of which is provided with a through-hole.

Referring to FIG. 3, the bottom portion of the secondary battery may be flat (the first figure of FIG. 3) or may be formed so as to have a curved surface that is concave inwards, wherein the radius of curvature of the concavely curved surface may be increased from the outer periphery to the center of the bottom portion (the second figure of FIG. 3). Alternatively, a central portion of the bottom portion may include a flat portion (the third figure of FIG. 3).

It can be seen from FIGS. 2 and 3 that the through-hole 250 is disposed at the central portion of the bottom portion of the cylindrical can 220 excluding a region of the bottom portion to which a negative electrode tab 212 is welded.

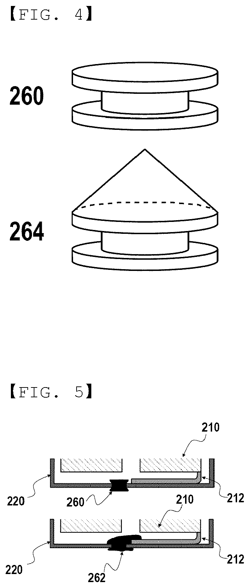

FIG. 4 is a perspective view of sealing portions according to the present invention.

Referring to FIG. 4, each of the sealing portions 260 and 264 may be made of a polymer resin. Each of the sealing portions 260 and 264 may be made of a thermoplastic polymer resin or a thermosetting polymer resin, specifically a thermoplastic polymer resin. In addition, the polymer resin may be an elastomer.

The sealing portion 260, which is shown at the upper part of FIG. 4, may be configured as a plug, the radius of the central portion of which is less than the radius of the outer periphery thereof, and the sealing portion 264, which is shown at the lower part of FIG. 4, may be configured such that a projection, the radius of which is gradually increased and is then abruptly decreased, is formed at a portion of the sealing portion configured to be inserted into the cylindrical secondary battery 200.

FIG. 5 is a view showing an example in which the through-hole according to the present invention is hermetically sealed using a sealing portion. Referring to FIG. 5, the sealing portion 260 may be inserted through the through-hole in order to hermetically seal the through-hole (the figure shown at the upper part of FIG. 5). Alternatively, in a hermetically sealing step, a thermoplastic polymer resin may be injected into the through-hole 250 so as to cover a region at which the negative electrode tab 212 is welded to the cylindrical can 220, whereby a sealing portion 262 may be formed.

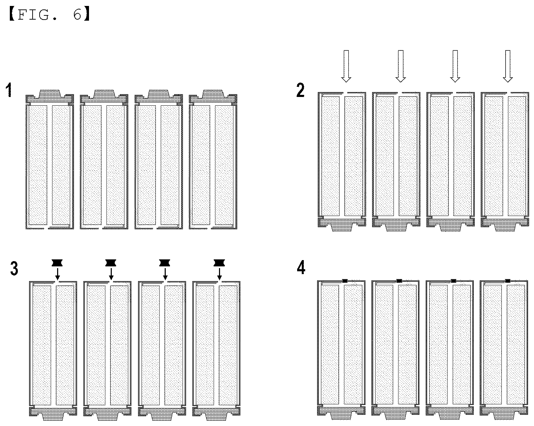

FIG. 6 is a schematic view showing a process of assembling a cylindrical secondary battery according to the present invention.

In the present invention, a cylindrical secondary battery is assembled as follows.

A step of forming a through-hole in a bottom portion of a cylindrical secondary battery, a step of receiving an electrode assembly and assembling a cap assembly (1 of FIG. 6), a step of turning the cylindrical secondary battery such that the bottom portion of the cylindrical secondary battery to which with the cap assembly is assembled faces upwards and the cap assembly faces downwards, injecting an electrolytic solution through the through-hole, and activating the cylindrical secondary battery or initially charging and discharging the cylindrical secondary battery (2 of FIG. 6), and a step of hermetically sealing the through-hole using a sealing portion (3 of FIG. 6) are performed, whereby a final cylindrical secondary battery is completed (4 of FIG. 6).

In addition, the present invention may provide a battery pack including the cylindrical secondary battery.

Specifically, the battery pack may be used as a power source for a device requiring the ability to withstand high temperature, long cycle characteristics, high rate characteristics, etc. Specific examples of the device may include a mobile electronic device, a wearable electronic device, a power tool driven by a battery-powered motor, an electric automobile, such as an electric vehicle (EV), a hybrid electric vehicle (HEV), or a plug-in hybrid electric vehicle (PHEV), an electric two-wheeled vehicle, such as an electric bicycle (E-bike) or an electric scooter (E-scooter), an electric golf cart, and an energy storage system. However, the present invention is not limited thereto.

The structure and manufacturing method of the device are well known in the art to which the present invention pertains, and thus a detailed description thereof will be omitted.

Those skilled in the art to which the present invention pertains will appreciate that various applications and modifications are possible within the category of the present invention based on the above description.

### (Description of Reference Numerals)

100, 200: Cylindrical secondary batteries
110, 210: Electrode assemblies
111: Positive electrode tab
112, 212: Negative electrode tabs
120, 220: Cylindrical cans
130, 230: Cap assemblies
131: Top cap
132: Venting member
133: Crimping gasket
134: Lower gasket
135: Current interrupt member
250: Through-hole
260, 262, 264: Sealing portions

### [Industrial Applicability]

As is apparent from the above description, in the present invention, a bottom portion of a cylindrical secondary battery is provided with a through-hole, which is hermetically sealed using a polymer resin or rubber, and an additional electrolytic solution may be supplied using a syringe even after the through-hole is hermetically sealed.

In addition, the bottom portion of the secondary battery is concave inwards. Even in the case in which pressure in the secondary battery is high, therefore, the bottom portion of the secondary battery is prevented from being deformed. Since a central portion of the bottom portion is concave, the pressure in the secondary battery is uniformly dispersed, whereby sealability of the secondary battery is excellent.

In addition, since a sealing portion is added to the central portion of the bottom portion of the cylindrical secondary battery, there is little compatibility problem due to deformation of a case even in the case in which the cylindrical secondary battery is used in a conventional battery module or a conventional battery pack.

In addition, the bottom portion of the cylindrical secondary battery is perforated, and the sealing portion is added thereto. Perforation is easily and rapidly performed, which is economical.

In addition, the sealing portion is added in the state in which the thickness thereof is minimized, whereby the capacity of a conventional secondary battery is not reduced.

In addition, the sealing portion is made of a thermoplastic polymer resin or rubber. In the case in which a portion of the thermoplastic polymer resin or rubber is injected into a can in order to hermetically seal the can, therefore, the thermoplastic polymer resin or rubber wraps a weld region of a negative electrode tab welded to the inner bottom of the can. As a result, it is possible to prevent the weld region in the can from being damaged even in the case in which the cylindrical secondary battery is used for a vehicle, to which strong external impact and vibration are applied.

## Claims

1. A cylindrical secondary battery comprising:
a cylindrical can having a circular bottom portion and a cylinder-shaped outer wall connected to an outer circumference of the bottom portion;
a jelly-roll type electrode assembly received in the cylindrical can, the jelly-roll type electrode assembly having a structure in which a positive electrode and a negative electrode are wound in a state in which a separator is interposed between the positive electrode and the negative electrode; and
a cap assembly configured to hermetically seal the cylindrical can, wherein
a through-hole is formed in a portion of the bottom portion of the cylindrical can, the through-hole being hermetically sealed by a sealing portion.

2. The cylindrical secondary battery according to claim 1, wherein the bottom portion is formed so as to have a curved surface that is concave inwardly of the cylindrical battery.

3. The cylindrical secondary battery according to claim 2, wherein a center of the bottom portion comprises a flat portion.

4. The cylindrical secondary battery according to claim 2, wherein the bottom portion is configured such that a radius of curvature of the concavely curved surface is increased from an outer periphery to a center of the bottom portion.

5. The cylindrical secondary battery according to claim 1, wherein the through-hole is disposed at a central portion of the bottom portion of the cylindrical can excluding a region of the bottom portion to which a negative electrode tab is welded.

6. The cylindrical secondary battery according to claim 5, wherein the through-hole is circular.

7. The cylindrical secondary battery according to claim 1, wherein the sealing portion is made of a polymer resin.

8. The cylindrical secondary battery according to claim 7, wherein the polymer resin is a thermoplastic polymer resin.

9. The cylindrical secondary battery according to claim 7, wherein the polymer resin is an elastomer.

10. The cylindrical secondary battery according to claim 1, wherein the sealing portion is configured as a plug, a radius of a central portion of which is less than a radius of an outer periphery thereof.

11. The cylindrical secondary battery according to claim 10, wherein the plug is configured such that a projection, a radius of which is gradually increased and is then abruptly decreased, is formed at a portion of the plug configured to be inserted into the cylindrical secondary battery.

12. A method of manufacturing the cylindrical secondary battery according to any one of claims 1 to 11, the method comprising:
1) forming a through-hole in a bottom portion of a cylindrical secondary battery;
2) receiving an electrode assembly and assembling a cap assembly;
3) disposing the cylindrical battery assembled in step 2) such that the bottom portion faces upwards;
4) injecting an electrolytic solution through the through-hole and activating the cylindrical battery or initially charging and discharging the cylindrical battery; and
5) hermetically sealing the through-hole using a sealing portion.

13. The method according to claim 12, further comprising injecting an additional electrolytic solution between step 4) and step 5).

14. The method according to claim 12, wherein the hermetically sealing step of step 5) comprises hermetically sealing the through-hole using a plug, a radius of a central portion of which is less than a radius of an outer periphery thereof.

15. The method according to claim 12, wherein the hermetically sealing step of step 5) comprises injecting a thermoplastic polymer resin into the through-hole so as to cover a negative electrode tab region welded to the cylindrical can in order to hermetically seal the through-hole.
